# FASCICULE DE BREVET EUROPEEN

(11) **EP 3 976 468 B1**
(45) Date de publication et mention de la délivrance du brevet: **11.10.2023**
(21) Numéro de dépôt: 20726763.4
(22) Date de dépôt: 14.05.2020
(51) Int. Cl.: B64D 33/02, B64C 7/02, B64D 29/00, B64D 15/12

(54) **LÈVRE D'ENTRÉE D'AIR DE NACELLE D'AÉRONEF COMPORTANT AU MOINS UNE SOURCE D'ÉMISSION D'INFRAROUGES**
LUFTEINLASSLIPPE EINER FLUGZEUGTRIEBWERKSGONDEL MIT MINDESTENS EINER INFRAROT-EMISSIONSQUELLE
AIR INTAKE LIP OF AN AIRCRAFT ENGINE NACELLE, COMPRISING AT LEAST ONE INFRARED EMISSION SOURCE

(30) Priorité: 27.05.2019 FR 1905586
(43) Date de publication de la demande: 06.04.2022
(73) Titulaire: Safran Nacelles, 76700 Gonfreville-l'Orcher (FR)
(72) Inventeur: GONIDEC, Patrick, 77550 Moissy-Cramayel (FR); RAMI, Jean-Paul, 77550 Moissy-Cramayel (FR)
(74) Mandataire: Argyma
(86) Numéro de dépôt international: PCT/EP2020/063490
(87) Numéro de publication internationale: WO 2020/239464

(56) Documents cités:
- DE-T2- 69 925 448
- FR-A1- 2 986 779
- US-A1- 2012 036 826
- Anonymous: "Reflexionsgrad - Wikipedia", , 18 novembre 2017 (2017-11-18), XP055664190, Extrait de l'Internet: URL:https://de.wikipedia.org/wiki/Reflexio nsgrad [extrait le 2020-02-03]

## Description

### DOMAINE TECHNIQUE DE L'INVENTION

La présente invention concerne le domaine des turbomachines d'aéronef et vise plus particulièrement un dispositif de dégivrage d'une lèvre d'entrée d'air d'une nacelle d'une turbomachine d'aéronef.

De manière connue, un aéronef comporte une ou plusieurs turbomachines pour permettre sa propulsion par accélération d'un flux d'air qui circule d'amont en aval dans la turbomachine.

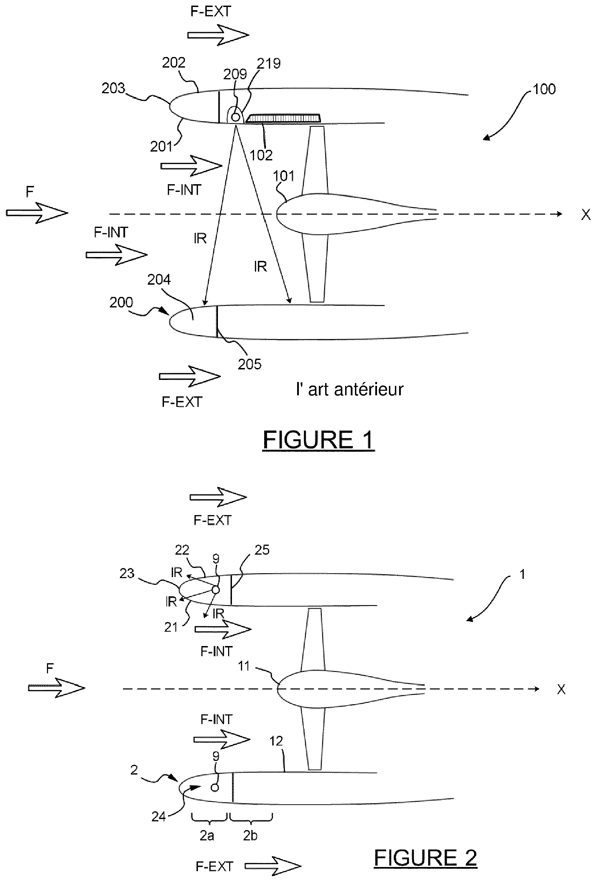

En référence à la figure 1, il est représenté une turbomachine 100 s'étendant selon un axe X et comportant une soufflante 101 montée rotative autour de l'axe X dans une nacelle comportant une virole extérieure 102 afin d'accélérer un flux d'air F d'amont vers l'aval. Par la suite, les termes amont et aval sont définis par rapport à la circulation du flux d'air F. La turbomachine 100 comporte à son extrémité amont une entrée d'air 200 qui permet de séparer le flux d'air entrant F en un flux d'air intérieur FINT qui est accéléré par la soufflante 101 et un flux d'air extérieur FEXT qui est guidé extérieurement à la nacelle. L'entrée d'air 200 comporte une partie amont, connue de l'homme du métier sous la désignation de lèvre, et une partie aval.

La lèvre comporte une paroi intérieure 201 tournée vers l'axe X et une paroi extérieure 202 qui est opposée à la paroi intérieure 201, les parois 201, 202 sont reliées par une paroi amont 203 et une cloison 205 de manière à former une cavité annulaire 204 connue de l'homme du métier sous la désignation de « D-Duct ». Ainsi, la lèvre permet de séparer le flux d'air entrant F en un flux d'air intérieur FINT guidé par la paroi intérieure 201 et un flux d'air extérieur FEXT guidé par la paroi extérieure 202. Par la suite, les termes intérieur et extérieur sont définis radialement par rapport à l'axe X de la turbomachine 100.

De manière connue, lors du vol d'un aéronef, du fait des conditions de température et de pression, du givre est susceptible de s'accumuler au niveau de la paroi amont 203, de la paroi extérieure 202 et de la paroi intérieure 201 de la lèvre pour former des blocs de givre qui sont susceptibles d'être ingérés par la turbomachine 100. De telles ingestions doivent être évitées afin d'améliorer la durée de vie de la turbomachine 100 et réduire les dysfonctionnements.

Pour éviter l'accumulation de givre, en référence à la figure 1, il est connu par la demande de brevet FR2986779A1 d'équiper la nacelle avec un dispositif de dégivrage 209 qui émet un rayonnement infrarouge afin de chauffer une partie de l'entrée d'air située en vis-à-vis et faire fondre le givre accumulé sur la paroi intérieure 201. En pratique, la nacelle comporte une enceinte 219 dans laquelle est monté le dispositif de dégivrage 209 afin d'émettre le rayonnement infrarouge sur une portion de l'entrée d'air 200 qui est diamétralement opposée. L'enceinte 219 est positionnée en aval de la cavité annulaire 204 de la lèvre, c'est-à-dire, dans une zone de la nacelle destinée à recevoir des panneaux de traitement acoustique.

Une telle solution présente l'inconvénient de ne pas permettre de retirer le givre de toute la surface de la lèvre. En particulier, le givre accumulé sur la paroi extérieure 202 ne peut pas être retiré. De plus, un dispositif de dégivrage infrarouge 209 possède une consommation électrique importante, ce qui affecte le rendement énergétique de la nacelle et, plus généralement, de la turbomachine. Par ailleurs, lorsque l'épaisseur de la couche de givre est importante, il est nécessaire d'apporter une grande puissance de chauffe afin de la faire fondre entièrement. Enfin, la présence d'un tel dispositif de dégivrage affecte les performances d'atténuation acoustique étant donné qu'il augmente l'encombrement et réduit la surface disponible pour la mise en place de panneaux de traitement acoustique.

Par ailleurs, on connaît par la demande de brevet FR2930234A1 une lèvre d'air comprenant une cavité annulaire dans laquelle est montée un dispositif de dégivrage infrarouge de manière à chauffer une lèvre d'entrée d'air par conduction thermique.

La demande de brevet FR2986779A1 décrit un ensemble d'entrée d'air équipé de projecteurs infrarouges disposés au niveau d'une surface interne d'une paroi interne et orientés vers l'extérieur de l'entrée d'air en direction d'une surface opposée à dégivrer.

Un des objectifs de la présente demande de brevet est de proposer une lèvre d'entrée d'air de nacelle comportant un dispositif de dégivrage qui élimine au moins certains de ces inconvénients.

### PRESENTATION DE L'INVENTION

L'invention concerne une lèvre d'entrée d'air d'une nacelle de turbomachine d'aéronef s'étendant selon un axe X dans lequel circule un flux d'air d'amont vers l'aval, la lèvre s'étendant de manière annulaire autour de l'axe X et comportant une paroi intérieure tournée vers l'axe X et une paroi extérieure qui est opposée à la paroi intérieure, la paroi intérieure et la paroi extérieure étant reliées par une paroi amont et une cloison de manière à délimiter une cavité annulaire dans laquelle est logée au moins une source d'émission d'infrarouges.

L'invention est remarquable en ce qu'au moins une paroi, choisie parmi la paroi intérieure, la paroi extérieure et la paroi amont, est réalisée dans un matériau configuré pour transmettre sur une face externe de ladite paroi au moins 30% des infrarouges reçus sur une face interne de ladite paroi. Les termes « interne » et « externe » sont définis par rapport à la cavité annulaire. Ainsi, chaque paroi de la lèvre comporte une face interne tournée vers la cavité annulaire et une face externe qui est opposée à la face interne.

Les infrarouges circulent ainsi à travers le matériau. De manière avantageuse, 30% des infrarouges reçus sur une face interne suffisent pour faire fondre localement l'interface entre la couche de givre et la paroi à dégivrer, ce qui permet un retrait pratique et rapide d'une couche de givre. Il n'est pas nécessaire de la faire fondre entièrement pour la retirer comme dans l'art antérieur. De plus, une source d'émission d'infrarouges dans la cavité annulaire permet de ne pas augmenter l'encombrement en aval de la cavité annulaire. Des panneaux d'atténuation acoustique peuvent être ainsi positionnés sans difficulté.

De préférence, au moins la paroi intérieure est réalisée dans un matériau configuré pour transmettre sur une face externe de ladite paroi au moins 30% des infrarouges reçus sur une face interne de ladite paroi.

De préférence, au moins deux parois choisies parmi la paroi intérieure, la paroi extérieure et la paroi amont sont réalisées dans un matériau configuré pour transmettre sur une face externe au moins 30% des infrarouges reçus sur une face interne, de préférence encore, toutes les 3. Cela permet de manière avantageuse de chauffer localement les parois de la lèvre d'entrée d'air pour obtenir leur dégivrage.

Selon un aspect, la paroi intérieure comporte au moins une première portion réalisée dans un matériau configuré pour transmettre sur une face externe au moins 60% des infrarouges reçus sur une face interne. Une telle paroi transparente permet de transmettre des infrarouges à distance pour un dégivrage distant.

Selon un aspect, la paroi intérieure comporte au moins une deuxième portion qui comprend une face interne de paroi intérieure configurée pour réfléchir au moins 50% des infrarouges reçus sur une face interne de la paroi intérieure. Une partie des infrarouges réfléchis peut ainsi être utilisée pour dégivrer d'autres parois locales ou réaliser un dégivrage distant.

De préférence, au moins une face interne d'une paroi, choisie parmi la paroi intérieure, la paroi extérieure ou la paroi amont, comporte au moins deux surfaces parallèles et décalées l'une par rapport à l'autre. Les infrarouges peuvent ainsi être focalisés de manière précise sur une portion d'une paroi de la lèvre d'entrée d'air.

Selon un aspect, la paroi extérieure comporte une face interne de paroi extérieure configurée pour réfléchir au moins 50% des infrarouges reçus sur la face interne de la paroi extérieure. Une partie des infrarouges réfléchis peut ainsi être utilisée pour dégivrer d'autres parois locales ou réaliser un dégivrage distant.

Selon un aspect, la paroi amont comporte une face interne de paroi amont configurée pour réfléchir au moins 50% des infrarouges reçus sur la face interne de la paroi amont. Une partie des infrarouges réfléchis peut ainsi être utilisée pour dégivrer d'autres parois locales ou réaliser un dégivrage distant.

Selon un aspect, la cloison comporte une face interne de cloison configurée pour réfléchir au moins 50% des infrarouges reçus sur la face interne de la cloison. Une telle cloison permet de remplir une fonction de réflecteur et ainsi concentrer les infrarouges pour un dégivrage local et/ou distant.

De manière préférée, la source d'émission d'infrarouges est décalée longitudinalement vers l'amont par rapport à la première portion de la paroi intérieure. Cela permet avantageusement de dégivrer de manière locale par transparence les parois de la lèvre d'entrée d'air. En outre, cela permet de bénéficier d'une première portion positionnée de manière optimale pour concentrer les infrarouges pour dégivrer à distance une portion opposée de la lèvre d'entrée d'air.

De préférence, la paroi extérieure comporte au moins une ouverture d'évacuation d'air chauffé. Ainsi, la cavité annulaire peut être refroidie de manière pratique par un flux d'air extérieur.

Selon un aspect de l'invention, la lèvre comporte au moins une paroi transparente circonférentielle montée sur la cloison dans la cavité annulaire de manière à délimiter une conduite annulaire, la source d'émission d'infrarouges étant montée dans ladite conduite annulaire. De manière avantageuse, cela permet de refroidir la source d'émission d'infrarouges indépendamment à la cavité annulaire qui peut être à une température optimale pour dégivrer les parois de la lèvre de l'entrée d'air.

Par « matériau transparent », on entend un matériau configuré pour transmettre sur une face externe au moins 60% des infrarouges reçus sur une face interne.

De préférence, la cloison comporte au moins une ouverture d'évacuation d'air chauffé. Ainsi, la conduite annulaire peut être refroidie sans interaction avec la cavité annuaire.

De préférence, la lèvre comprend au moins un moyen de détection de givre configuré pour inactiver la source d'émission d'infrarouges en cas d'absence de givre.

De manière préférée, la source d'émission d'infrarouges comporte au moins un émetteur infrarouge et au moins un calculateur configuré pour commander l'émetteur infrarouge en fonction de la présence ou de l'absence de givre. Ainsi, l'émission d'infrarouges peut être stoppée lorsque la couche de givre a été retirée, en particulier, pour économiser de l'énergie.

De préférence, le moyen de détection de givre comporte au moins une source d'émission d'ondes de détection et au moins un capteur de mesure de la réflexion des ondes de détection par la couche de givre. La présence de givre est ainsi détectée de manière indirecte en s'appuyant sur les ondes de détection réfléchies par la couche de givre.

L'invention concerne une entrée d'air d'une nacelle de turbomachine d'aéronef s'étendant selon un axe X dans lequel circule un flux d'air d'amont vers l'aval comprenant une lèvre telle que présentée précédemment. De préférence, l'entrée d'air comporte une partie amont, formée par la lèvre, et une partie aval sur laquelle est montée la lèvre.

L'invention concerne également un procédé de dégivrage d'une lèvre d'entrée d'air telle que présentée précédemment, le procédé comprenant :
une étape d'activation de la source d'émission d'infrarouges dans la cavité annulaire de manière à émettre des infrarouges sur la face interne d'au moins une paroi choisie parmi la paroi intérieure, la paroi extérieure et la paroi amont, et
une étape de transmission à la face externe de ladite paroi ayant reçu des infrarouges d'au moins 30% des infrarouges reçus sur la face interne de ladite paroi.

Un chauffage intérieur local permet de retirer une couche de givre sans la faire fondre entièrement ou sublimer la glace en vapeur, ce qui procure un gain énergétique important. En outre, toute la lèvre d'entrée d'air peut être dégivrée localement par transparence.

De préférence, le procédé comprend une étape de détection de la présence de givre sur la face externe de ladite paroi ayant reçu des infrarouges et une étape d'inhibition de la source d'émission d'infrarouges en cas d'absence de givre.

Un dégivrage intermittent par émissions d'infrarouges est avantageux sur le plan énergétique car la source d'émission d'infrarouges n'est pas activée de manière continue. Un tel fonctionnement intermittent demeure efficace du fait de la grande réactivité de la source d'émission d'infrarouges et du fait que le chauffage est réalisé localement depuis l'intérieur.

Grâce à l'invention, la source d'émission d'infrarouges permet de dégivrer une paroi intérieure, une paroi extérieure et une paroi amont de manière rapide et économique par comparaison à l'art antérieur qui utilise une source d'émission d'infrarouges confinée.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'une turbomachine en coupe longitudinale selon l'art antérieur ;
La figure 2 est une représentation schématique d'une turbomachine en coupe longitudinale selon une forme de réalisation de l'invention ;
La figure 3 est une représentation schématique rapprochée, selon une demi-coupe longitudinale, d'une lèvre d'entrée d'air selon l'invention ;
La figure 4 est une représentation schématique, selon une coupe longitudinale, d'une lèvre d'entrée d'air selon l'invention lors d'un dégivrage distant ;
Les figures 5A à 5C sont des représentations schématiques d'un dégivrage extérieur distant, d'un dégivrage intérieur par conduction et d'un dégivrage intérieur par transmission ;
Les figures 6 et 7 sont des représentations schématiques longitudinale et transversale d'une lèvre d'entrée d'air ;
Les figures 8 et 9 sont des représentations schématiques longitudinale et transversale d'une lèvre d'entrée d'air avec une conduite annulaire ;
Les figures 10-10D et 11 sont des représentations schématiques longitudinales de plusieurs formes de réalisation d'une lèvre d'entrée d'air selon l'invention ;
La figure 12 est une représentation schématique d'une source d'émission d'infrarouges ;
Les figures 13 et 14 sont des représentations schématiques d'un moyen de détection de givre.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

En référence à la figure 2, il est représenté une turbomachine 1 s'étendant selon un axe X et comportant une soufflante 11 montée rotative autour de l'axe X dans une nacelle comportant une virole extérieure 12 afin d'accélérer un flux d'air F d'amont vers l'aval. Par la suite, les termes amont et aval sont définis par rapport à la circulation du flux d'air F. La turbomachine 1 comporte à son extrémité amont une entrée d'air 2 comportant une partie amont 2a, connue de l'homme du métier sous la désignation de lèvre 2a, et une partie aval 2b. Dans cet exemple, la lèvre 2a est séparée de la partie aval 2b par une cloison 25.

La lèvre 2a comporte une paroi intérieure 21 tournée vers l'axe X et une paroi extérieure 22 qui est opposée à la paroi intérieure 21, les parois 21, 22 sont reliées par une paroi amont 23 et une cloison 25 de manière à délimiter une cavité annulaire 24 connue de l'homme du métier sous sa désignation anglaise « D-Duct ». Ainsi, la lèvre 2a permet de séparer le flux d'air entrant F en un flux d'air intérieur FINT guidé par la paroi intérieure 21 et un flux d'air extérieur FEXT guidé par la paroi extérieure 22. Par la suite, les termes « intérieur » et « extérieur » sont définis radialement par rapport à l'axe X de la turbomachine 1. De même, par la suite, les termes « interne » et « externe » sont définis par rapport à la cavité annulaire 24. Ainsi, chaque paroi de la lèvre 2a comporte une face interne tournée vers la cavité annulaire 24 et une face externe qui est opposée à la face interne. Dans cet exemple, la turbomachine 1 est un turboréacteur.

La cloison 25, appelée également paroi avant, est montée entre la paroi intérieure 21 et la paroi extérieure 22, de préférence, sensiblement radialement.

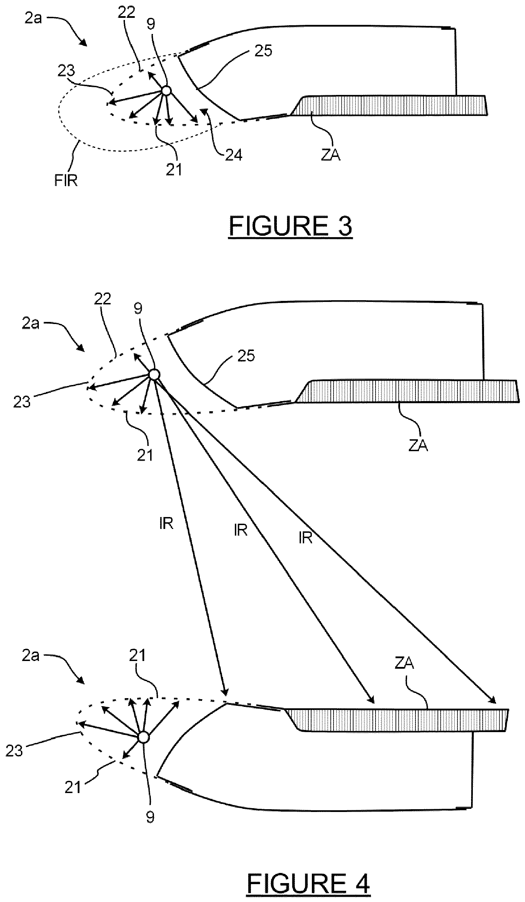

Dans cet exemple, la nacelle comporte en outre un panneau d'atténuation acoustique ZA en aval de la cavité annulaire 24 dans le prolongement de la paroi intérieure 21 comme illustré à la figure 3. Un tel panneau acoustique ZA est connu de l'homme du métier et ne sera pas présentée plus en détails.

Selon l'invention, la lèvre 2a comporte au moins une source d'émission d'infrarouges 9 dans la cavité annulaire 24. La paroi intérieure 21, la paroi extérieure 22 et/ou la paroi amont 23 sont réalisées dans un matériau configuré pour transmettre sur une face externe au moins 30% des infrarouges reçus sur une face interne. Par souci de clarté et de concision, un tel matériau est désigné par la suite « semi-transparent ».

Autrement dit, contrairement à l'art antérieur qui enseignait de confiner la source d'émission d'infrarouges 9 dans une enceinte de dimensions réduites en aval de la cavité annulaire 24 afin de ne réaliser qu'un dégivrage distant d'une portion de l'entrée d'air diamétralement opposée, la présente invention permet de réaliser un dégivrage local « par transparence » en permettant de chauffer l'interface entre la couche de givre et la paroi sur laquelle elle est formée.

De manière préférée, la source d'émission d'infrarouges 9 comporte une pluralité d'émetteurs infrarouge, en particulier des diodes ou des résistances infrarouge, émettant un rayonnement électromagnétique dont le spectre d'émission est compris entre 0,7 et 12 µm. De préférence, la longueur d'onde est déterminée pour posséder une émissivité/absorption maximale vis-à-vis de l'eau constituant le givre.

Selon une première forme de réalisation, en référence à la figure 3, la lèvre 2a comporte une paroi intérieure 21, une paroi extérieure 22 et une paroi amont 23 qui sont semi-transparentes afin de permettre de chauffer par transmission infrarouge une couche de givre. Ainsi, la source d'émission d'infrarouges 9 génère un flux d'infrarouge FIR qui chauffe la surface externe de la paroi intérieure 21, de la paroi extérieure 22 et de la paroi amont 23. Une telle configuration présente de nombreux avantages étant donné que la paroi intérieure 21, la paroi extérieure 22 et la paroi amont 23 sont dégivrées de manière pratique et efficace.

Dans cette forme de réalisation, la paroi intérieure 21, la paroi extérieure 22 et paroi amont 23 sont réalisées dans un matériau configuré pour transmettre sur une face externe au moins 60% des infrarouges reçus sur une face interne. Par souci de clarté et de concision, un tel matériau est désigné par la suite « transparent ».

Un tel matériau transparent permet de transmettre les infrarouges à distance, en particulier, pour réaliser un chauffage distant d'une portion diamétralement opposée de l'entrée d'air 2 (figure 4). Comme cela sera présenté par la suite, la paroi intérieure 21 comporte au moins une première portion réalisée dans un matériau transparent afin de réaliser un chauffage d'une portion diamétralement opposée de l'entrée d'air 2.

A titre d'exemple, la paroi intérieure 21, la paroi extérieure 22 et la paroi amont 23 sont réalisées dans un ou plusieurs des matériaux suivants : vitrocéramique, polyéthylène, polycarbonate, polyméthacrylate de méthyle et analogues. Les faces internes/externes peuvent subir des traitements de surface afin d'adapter leurs propriétés de transmission/réflexion des infrarouges.

Dans cet exemple, la paroi intérieure 21, la paroi extérieure 22 et la paroi amont 23 sont toutes réalisées dans un matériau au moins semi-transparent mais il va de soi que seule une ou deux parois choisies parmi la paroi intérieure 21, la paroi extérieure 22 et la paroi amont 23 pourraient être réalisées dans un matériau au moins semi-transparent.

Les avantages d'un dégivrage selon l'invention vont être explicités par comparaison à un dégivrage « extérieur » tel que décrit dans l'art antérieur.

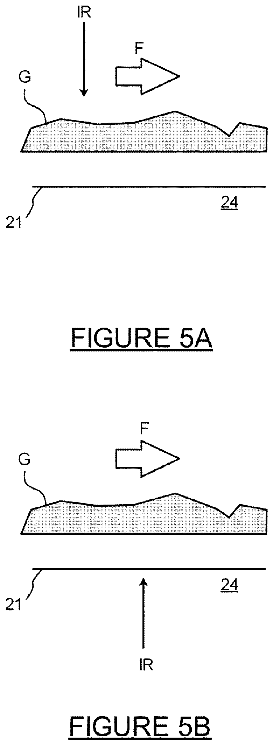

Comme illustré à la figure 5A, pour un dégivrage distant extérieur, pour retirer une couche de givre G sur la paroi intérieure 21, les infrarouges IR doivent faire fondre entièrement l'épaisseur de la couche de givre G. La durée et la puissance d'émission des infrarouges sont importantes, ce qui consomme une énergie importante.

En référence à la figure 5B, pour une paroi opaque, c'est à dire comportant un matériau configuré pour transmettre sur une face externe moins de 30% des infrarouges reçus sur une face interne, les infrarouges IR chauffent la paroi intérieure 21 qui monte en température. La couche de givre G fond lentement par conduction thermique et consomme une énergie importante.

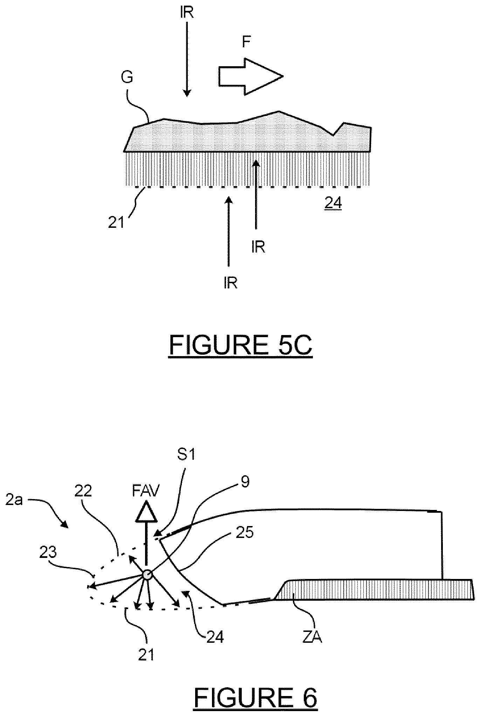

En référence à la figure 5C, pour une paroi semi-transparente ou transparente, on obtient un chauffage local accéléré étant donné que les infrarouges IR atteignent directement l'interface entre la couche de givre G et la paroi intérieure 21. Une pellicule d'eau liquide ou de vapeur se forme entre la couche de givre G et la paroi intérieure 21, ce qui facilite le détachement de la couche de givre G. Autrement dit, le retrait de la couche de givre G est accéléré par comparaison à l'art antérieur étant donné qu'il n'est pas nécessaire de faire fondre toute l'épaisseur de la couche de givre G pour parvenir à son retrait. Grâce à l'invention, la couche de givre G est éliminée de manière rapide tout en utilisant une énergie réduite. En pratique, lors du dégivrage, la couche de givre G reçoit directement les infrarouges dont la longueur d'onde a été déterminée pour posséder une émissivité/absorption maximale vis-à-vis de l'eau constituant le givre.

De manière avantageuse, une paroi semi-transparente ne filtre qu'une faible partie de l'énergie de rayonnement, l'interface entre la couche de givre et la paroi recevant directement et quasi instantanément le rayonnement des infrarouges IR. Le givre situé à l'interface fond donc très rapidement. Le temps de réponse est quasi instantané étant donné qu'il ne dépend pas du temps d'établissement d'un flux convectif, ni du réchauffement de la paroi par conduction thermique. Les parois de la lèvre 2a sont maintenues à une température supérieure à 0°C, ce qui permet d'éviter tout givrage.

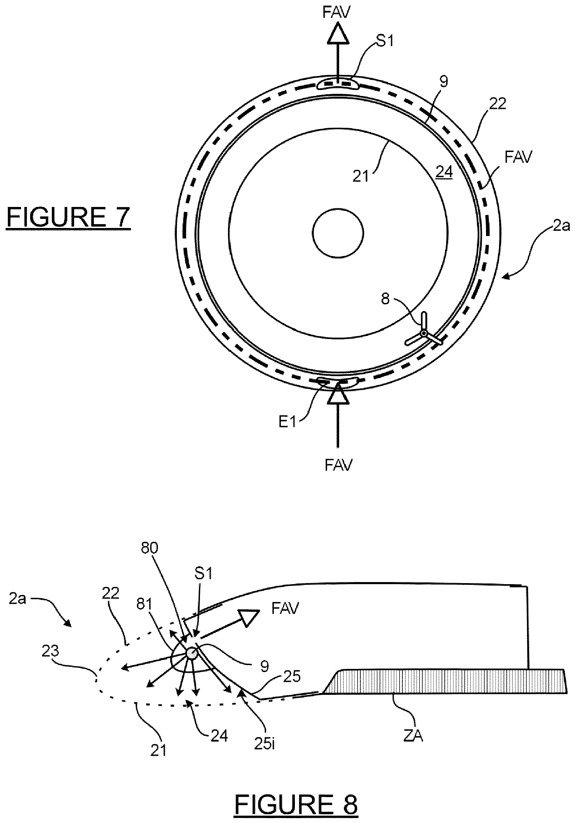

Selon un aspect de l'invention, en référence aux figures 6 et 7, la lèvre 2a comporte au moins une entrée de ventilation E1 et une sortie de ventilation S1 configurées pour permettre la circulation d'un flux d'air de ventilation FAV dans la cavité annulaire 24 afin de refroidir la source d'émission d'infrarouges 9. De manière préférée, l'entrée de ventilation E1 et la sortie de ventilation S1 sont formées dans la paroi extérieure 22, en particulier, de manière diamétralement opposée comme illustré à la figure 7. Une partie du flux d'air extérieur est prélevée par l'entrée de ventilation E1, circule dans la cavité annulaire 24 au contact avec la source d'émission d'infrarouges 9 puis s'échappe par la sortie de ventilation S1. De manière optionnelle, en référence à la figure 7, la lèvre 2a comporte au moins un organe d'accélération 8, par exemple un ventilateur, pour accélérer le flux d'air de ventilation FAV dans la cavité annulaire 24 et ainsi améliorer le refroidissement. Toute surchauffe de la source d'émission d'infrarouges 9 est ainsi évitée.

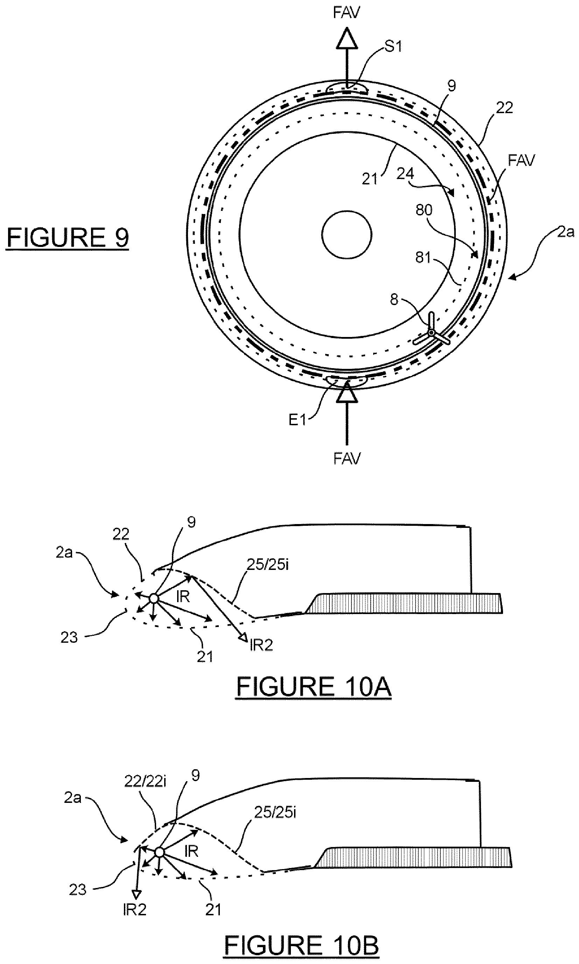

Selon un autre aspect de l'invention, en référence aux figures 8 et 9, la lèvre 2a comporte au moins une paroi transparente circonférentielle 81 montée sur une face interne 25i de la cloison 25 dans la cavité annulaire 24 de manière à délimiter une conduite annulaire 80. La source d'émission d'infrarouges 9 est montée dans ladite conduite annulaire 80. Autrement dit, la source d'émission d'infrarouges 9 n'est pas montée directement en vis-à-vis de la surface interne de la paroi intérieure 21, de la paroi extérieure 22 et de la paroi amont 23 mais logée dans une conduite annulaire 80 qui peut être ventilée de manière indépendante de la cavité annulaire 24. Cela est très avantageux pour refroidir efficacement la source d'émission d'infrarouge 9 en maintenant une température basse dans la conduite annulaire 80, la température dans la cavité annulaire 24 pouvant être plus élevée pour assurer un dégivrage optimal de la paroi intérieure 21, de la paroi extérieure 22 et de paroi amont 23.

De manière analogue à précédemment, en référence à la figure 9, la conduite annulaire 80 comporte au moins une entrée de ventilation E1 et une sortie de ventilation S1 configurées pour permettre la circulation d'un flux d'air de ventilation FAV dans la conduite annulaire 80 afin de refroidir la source d'émission d'infrarouges 9. De manière préférée, l'entrée de ventilation E1 et la sortie de ventilation S1 sont formées dans la cloison 25, en particulier, de manière diamétralement opposée comme illustré à la figure 9. De manière optionnelle, en référence à la figure 9, la lèvre 2a comporte au moins un organe d'accélération 8, par exemple un ventilateur, pour accélérer le flux d'air de ventilation FAV dans la conduite annulaire 80 et ainsi améliorer le refroidissement.

Selon un aspect de l'invention, en référence à la figure 10A, la cloison 25 comporte une face interne 25i configurée pour réfléchir au moins 50% des infrarouges reçus sur la face interne. Par souci de clarté et de concision, une telle face interne est désignée par la suite « semi-réfléchissante ».

La cloison 25 permet de réfléchir les infrarouges IR reçus dans la cavité annulaire 24 afin de les canaliser et permettre un dégivrage optimal de la paroi intérieure 21, de la paroi extérieure 22 et de la paroi amont 23. Autrement dit, tout infrarouge émis IR par la source d'émission d'infrarouges 9 génère un infrarouge réfléchi IR2 au contact de la cloison 25 qui entre alors en contact avec la paroi intérieure 21, la paroi extérieure 22 ou la paroi amont23. Dans cet exemple, la paroi intérieure 21, la paroi extérieure 22 ou la paroi amont 23 sont au moins semitransparents.

La source d'émission d'infrarouges 9 émet de manière omnidirectionnelle et la cloison 25 permet de concentrer les infrarouges sur les parois à dégivrer. De manière avantageuse, l'utilisation d'une telle cloison 25 permet de régler l'incidence des infrarouges en adaptant la forme de la cloison 25 et en positionnant de manière judicieuse la source d'émission d'infrarouges 9 dans la cavité annulaire 24.

De manière préférée, afin de concentrer de manière optimale les infrarouges IR, la cloison 25 comporte une face interne 25i configurée pour réfléchir au moins 80% des infrarouges reçus sur la face interne. Par souci de clarté et de concision, une telle face interne est désignée par la suite « réfléchissante ». De même, une face interne, configurée pour réfléchir moins de 30% des infrarouges reçus sur la face interne, est désignée par la suite « non réfléchissante ». La face interne 25i de la cloison 25 rempli ainsi une fonction de réflecteur pour les infrarouges.

Selon un aspect de l'invention, en référence à la figure 10B, la paroi extérieure 22 comporte en outre une face interne 22i qui est semi-réfléchissante ou réfléchissante de manière à réfléchir les infrarouges IR vers la cavité annulaire 24 en particulier vers la paroi amont 23 et la paroi intérieure 21 qui sont semi-transparentes (ou transparentes) et non réfléchissantes. En outre, cela permet de rayonner en dehors de la cavité annulaire 24 pour dégivrer par l'extérieur une autre portion de la lèvre 2a.

Selon un aspect de l'invention non représenté, la paroi amont 23 comporte en outre une face interne qui est semi-réfléchissante de manière à réfléchir les infrarouges vers la cavité annulaire 24 en particulier vers la paroi intérieure 21 qui est semi-transparente (ou transparente) et non réfléchissante. Cela permet de concentrer les infrarouges vers la paroi intérieure 21 qui est la plus susceptible de recevoir du givre. En outre, cela permet de rayonner en dehors de la cavité annulaire 24 pour dégivrer par l'extérieur une autre portion de la lèvre 2a.

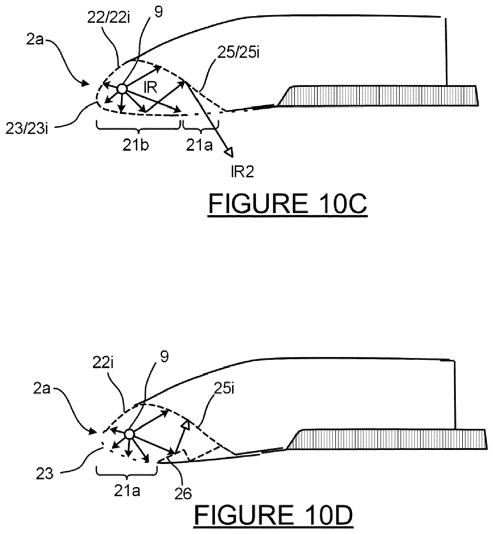

Selon un autre aspect de l'invention, en référence à la figure 10C, la paroi intérieure 21 comporte une première portion 21a réalisée dans un matériau semi-transparent (ou transparent) et non réfléchissant et une deuxième portion 21b qui comprend une face interne au moins semi-réfléchissante de manière à favoriser une transmission des infrarouges par la première portion 21a tout en autorisant un dégivrage des autres parties de la lèvre 2a en autorisant une transmission d'au moins 30% des infrarouges. En référence à la figure 10C, la première portion 21a est une portion aval de la paroi intérieure 21 de manière à bénéficier d'un angle d'incidence permettant de réaliser un dégivrage extérieur optimal.

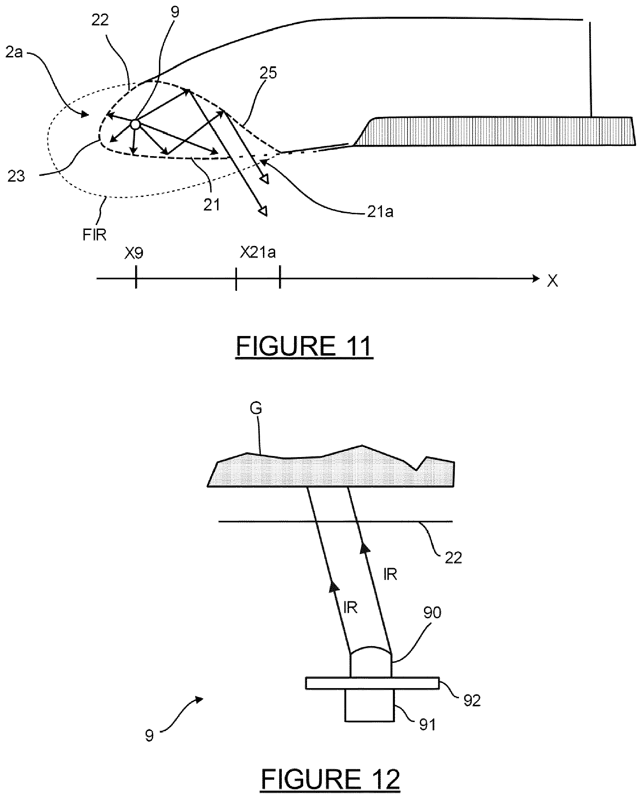

Comme illustré à la figure 11, seule une première portion 21a de la paroi intérieure 21 est non-réfléchissante et forme une sortie pour les infrarouges IR qui sont réfléchis dans la cavité annulaire 24. Dans cette forme de réalisation, la source d'émission d'infrarouges 9 est décalée longitudinalement par rapport à la première portion 21a de la paroi intérieure 21. Dans cet exemple, en référence à la figure 11, la source d'émission d'infrarouges 9 (position X9) est en amont de la première portion 21a de la paroi intérieure 21 (position X21a), c'est-à-dire, à proximité de la paroi amont 23. Un tel décalage axial est avantageux à plusieurs titres. Tout d'abord, la proximité entre la source d'émission d'infrarouges 9 et la paroi amont 23 permet un dégivrage optimal de la paroi amont 23 et des parois intérieure 21 et extérieure 22 situées au voisinage, c'est-à-dire, dans le périmètre du flux infrarouge FIR transmis à travers la lèvre 2a. De plus, la première portion 21a de la paroi intérieure 21 est positionnée de manière optimale pour réaliser un dégivrage extérieur distant en collectant les infrarouges réfléchis IR2 par les différentes surfaces réfléchissantes et les focaliser sur une paroi distante, de préférence, diamétralement opposée. Une telle configuration permet avantageusement de réaliser un dégivrage intérieur local mais également un dégivrage extérieur distant.

Selon un autre aspect de l'invention, en référence à la figure 10D, une face interne semi-réfléchissante ou réfléchissante peut comporter une pluralité de surfaces 26 décalées l'une par rapport à l'autre, c'est-à-dire des surfaces de Fresnel, afin de guider les infrarouges IR réfléchis de manière optimale. Les surfaces 26 sont de préférence coniques. Il est représenté sur la figure 10D une paroi intérieure 21 comportant des surfaces de Fresnel 26 mais il va de soi qu'une telle surface pourrait être formée sur une ou plusieurs parois choisies parmi la paroi intérieure 21, la paroi extérieure 22, la paroi amont 23 et la cloison 25.

En référence à la figure 12, la source d'émission d'infrarouges 9 comporte une pluralité d'émetteurs d'infrarouges, en particulier des diodes infrarouges 90 ou tout autre lampe infrarouge, un calculateur 91 configuré pour commander les diodes infrarouges 90 en fonction de la présence de givre. De préférence, les diodes infrarouges 90 et le calculateur 91 sont montés sur une même carte électronique 92. A titre d'exemple, le calculateur 91 se présente sous la forme d'un processeur relié à la carte électronique 92.

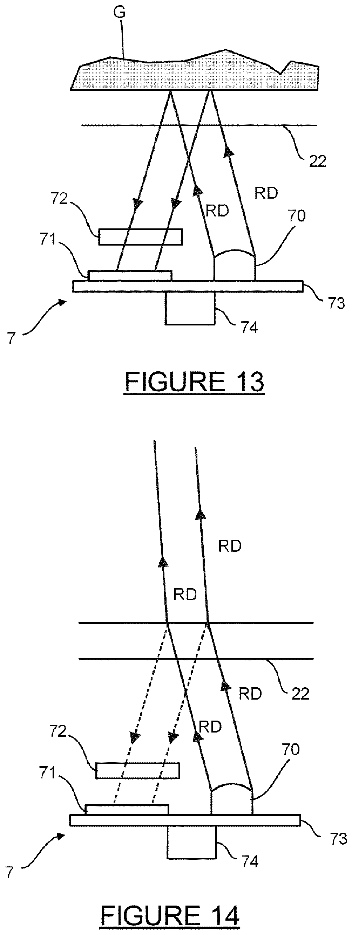

En référence aux figures 13 et 14, il est représenté un moyen de détection de givre 7 comportant une source d'émission 70 d'ondes de détection RD, en particulier des diodes électroluminescentes, et un capteur de mesure 71 de la réflexion des ondes de détection RD par la couche de givre G. En référence aux figures 13 à 14, la source d'émission 70 d'ondes de détection RD et le capteur de mesure 71 sont montés sur une même carte électronique 73 avec un calculateur 74. De préférence, le moyen de détection de givre 7 comporte une source d'alimentation électrique non représentée. Les ondes de détection RD ont de préférence une longueur d'onde qui est différente de celle des ondes infrarouges IR utilisées pour le dégivrage. De manière préférée, les ondes de détection RD sont des ondes électromagnétiques ayant, de préférence, une longueur d'onde comprise entre 0,7 et 1,7 µm. De telles ondes électromagnétiques sont avantageuses étant donné que la couche de givre G a une réflexivité importante pour ladite plage de longueurs d'onde.

De préférence, le moyen de détection de givre 7 est réparti à la circonférence de la paroi amont 23.

De manière préférée, le moyen de détection de givre 7 est relié à la source d'émission d'infrarouges 9 de manière à contrôler l'émission d'infrarouges IR en fonction de la présence de givre. A titre d'exemple, le calculateur 74 de la source d'émission 70 d'ondes de détection RD est configuré pour échanger des données avec le calculateur 91 de la source d'émission d'infrarouges 9.

Dans cette forme de réalisation, le moyen de détection de givre 7 comporte en outre un filtre 72, disposé devant le capteur de mesure 71 de manière à stopper les rayonnements parasites, en particulier, provenant de sources d'émission d'infrarouges 9 servant au dégivrage. De préférence, le filtre 72 possède une bande passante comprise entre 0,7 et 1,7 µm et permet d'absorber une grande partie du rayonnement infrarouge émis par ces autres sources et dont le spectre énergétique se situe au-delà de la longueur d'onde 1,7 µm.

Dans cet exemple, le capteur de mesure 71 est configuré pour mesurer des ondes de détection RD selon une direction afin de déterminer la fraction des ondes de détections RD qui est réfléchie par le givre. Un tel capteur de mesure 71 est ainsi sensible aux ondes électromagnétiques. Un tel capteur de mesure 71 permet de détecter de manière directe la présence d'une couche de givre G sur la face externe de la paroi. En effet, plus la fraction d'ondes de détection RD réfléchis est importante, plus la couche de givre G est épaisse et réfléchit les ondes de détection RD. A l'inverse, plus la fraction d'ondes de détection RD réfléchis est faible, plus la couche de givre G est fine et transmet les ondes de détection RD. De manière préférée, la lèvre 2a comporte une pluralité de capteurs de mesure 71 disposés à la circonférence de la lèvre 2a.

De manière alternative, le moyen de détection de givre 7 comporte un ou plusieurs capteurs piézoélectriques placés dans la cavité annulaire 24 afin de détecter les ondes de Lamb dans la paroi à dégivrer et en déduire la présence ou l'absence de givre.

De manière alternative, le moyen de détection de givre 7 comporte une ou deux caméras de mesure infrarouge, chacune étant équipée d'un objectif grand angle, peuvent être utilisées pour mesurer la présence de givre. De telles caméras sont de préférence positionnées en dehors de la cavité annulaire 24 de la lèvre 2a.

Plusieurs modes de mise en oeuvre de l'invention vont être dorénavant présentés pour le dégivrage d'une paroi extérieure 22 mais l'enseignement s'applique pour la paroi intérieure 21 ou la paroi amont 23, qu'elle soit semi-transparente ou transparente. Des meilleurs résultats sont néanmoins obtenus pour une paroi transparente.

Tout d'abord, la source d'émission d'infrarouges 9 peut être activée de manière sensiblement continue en conditions givrantes de manière à faire fondre la couche de givre G et la maintenir sous forme d'eau liquide jusqu'à son ingestion par la soufflante 11.

La source d'émission d'infrarouges 9 permet de réchauffer toute la surface de la paroi extérieure 22 à une température positive, par exemple de l'ordre de 5°C, pour conserver l'eau liquide en amont de la soufflante 11. De manière avantageuse, la couche de givre G n'est pas vaporisée, ce qui procure une économie d'énergie. Cette solution est d'autant plus intéressante que la surface pertinente à maintenir à température positive est faible, l'énergie nécessaire étant alors réduite.

De manière alternative, la source d'émission d'infrarouges 9 peut être activée de manière intermittente de manière à détacher la couche de givre G en morceaux de glace solide.

Etant donné que la source d'émission d'infrarouges 9 possède un temps de réponse faible, par exemple de l'ordre de la seconde pour atteindre la puissance maximale, un dégivrage intermittent peut être réalisé pour limiter la consommation énergétique. En pratique, la source d'émission d'infrarouges 9 peut être stoppée pour autoriser une faible épaisseur d'une couche de givre pendant une période de temps prédéterminée, par exemple, entre une et trente secondes. La source d'émission d'infrarouges 9 est ensuite activée, par exemple pendant une à trente secondes, de manière à décoller la couche de givre de la paroi en ne faisant fondre que la fine interface entre la couche de glace et la paroi. La couche de givre G est alors entraînée par l'écoulement d'air environnant en fragments de petite taille qui sont absorbés par la turbomachine. Une utilisation intermittente permet un gain d'énergie important car seule l'interface avec la paroi doit être fondue, une grande partie de la couche de givre G demeurant solide.

La densité d'énergie infrarouge peut être soit uniformément répartie soit être renforcée par focalisation du rayonnement infrarouge, en particulier, selon un maillage dont la taille d'une maille est faible, par exemple, de l'ordre d'une dizaine de millimètres. Une focalisation maillée permet avantageusement de calibrer la taille des fragments de la couche de givre G et facilite leur évacuation par l'écoulement d'air.

Comme cela va être présenté par la suite, le contrôle d'activation de la source d'émission d'infrarouges 9 est déterminé en fonction d'une détection du givre. De manière alternative, le contrôle pourrait être réalisé en analysant la température de la cavité annulaire 24. A cet effet, la lèvre 2a peut comporter un ou plusieurs capteurs de température placés sur la surface interne ou la surface externe de la paroi à dégivrer.

A la figure 13, une couche de givre G est présente sur la surface externe de la paroi extérieure 22, la source d'émission 70 émet des ondes de détection RD vers la paroi extérieure 22 dont une fraction est réfléchie par la couche de givre G et mesurée par le capteur de mesure 71. Ainsi, les ondes de détection RD réfléchies traversent deux fois la paroi extérieure 22. De manière avantageuse, les pertes dues à l'absorption dans le matériau de la paroi extérieure 22 sont faibles étant donné sa transmittance élevée sur la plage de longueur d'onde.

Dans cet exemple, le filtre 72 permet d'éliminer tout rayonnement infrarouge parasite pour la détection du givre. Le calculateur 74 compare la fraction mesurée à un seuil prédéterminé afin de déterminer la présence ou l'absence de givre. De manière préférée, le seuil est calibré par retour d'expérience.

Autrement dit, lorsque peu d'ondes de détection RD réfléchies sont détectées (Figure 14), on en déduit que la couche de givre G a disparu. De manière préférée, lorsque le calculateur 74 détecte une absence de givre, une instruction d'arrêt est émise par le calculateur 74 du moyen de détection de givre 7 au calculateur 91 de la source d'émission 9, ce qui limite avantageusement la consommation énergétique.

Lors de l'apparition d'une nouvelle couche de givre G, les diodes électroluminescentes 90 de la source d'émission d'infrarouges 9 sont de nouveau activées. Le temps de latence à l'activation est calibré de manière à éviter la formation d'une couche épaisse de givre. Le temps de latence est par exemple paramétré en fonction des propriétés de transmittance et de conduction du matériau de la paroi à dégivrer.

De manière avantageuse, un tel dispositif de dégivrage procure un gain de masse par comparaison à un dispositif de dégivrage pneumatique traditionnel. En outre, la puissance de dégivrage nécessaire pour dégivrer par semi-transparence ou transparence est divisé par un facteur 5 à 20, ce qui est très avantageux sur le plan énergétique. En effet, il n'est notamment plus nécessaire de sublimer la totalité du givre solide en vapeur comme dans l'art antérieur.

La complexité de la nacelle est par ailleurs diminuée et l'espace dédié au montage de panneaux d'atténuation acoustique n'est pas affecté. Les propriétés d'atténuation acoustique sont ainsi préservées. De plus, la présence d'une portion transparente dans la paroi intérieure permet d'allier un chauffage local à un chauffage distant, ce qui améliore la qualité et la vitesse du dégivrage. Les différentes faces internes semi-réfléchissantes ou réfléchissantes permettent de jouer un rôle de concentrateur qui optimise l'utilisation de la source d'émission d'infrarouges pour un dégivrage distant.

## Revendications

1. Lèvre (2a) d'entrée d'air (2) d'une nacelle de turbomachine (1) d'aéronef s'étendant selon un axe X dans lequel circule un flux d'air (F) d'amont vers l'aval, la lèvre (2a) s'étendant de manière annulaire autour de l'axe X et comportant une paroi intérieure (21) tournée vers l'axe X et une paroi extérieure (22) qui est opposée à la paroi intérieure (21), la paroi intérieure (21) et la paroi extérieure (22) étant reliées par une paroi amont (23) et une cloison (25) de manière à délimiter une cavité annulaire (24) dans laquelle est logée au moins une source d'émission d'infrarouges (9), la **lèvre caractérisée par le fait qu'au** moins une paroi, choisie parmi la paroi intérieure (21), la paroi extérieure (22) et la paroi amont (23), est réalisée dans un matériau configuré pour transmettre sur une face externe de ladite paroi au moins 30% des infrarouges reçus sur une face interne de ladite paroi.

2. Lèvre (2a) selon la revendication 1, dans laquelle la paroi intérieure (21) comporte au moins une première portion (21a) réalisée dans un matériau configuré pour transmettre sur une face externe de ladite paroi au moins 60% des infrarouges reçus sur une face interne de ladite paroi.

3. Lèvre (2a) selon l'une des revendications 1 et 2, dans laquelle la paroi intérieure (21) comporte au moins une deuxième portion (21b) qui comprend une face interne de paroi intérieure (21) configurée pour réfléchir au moins 50% des infrarouges reçus sur la face interne de paroi intérieure (21).

4. Lèvre (2a) selon l'une des revendications 1 à 3, dans laquelle la paroi extérieure (22) comporte une face interne (22i) de paroi extérieure (22) configurée pour réfléchir au moins 50% des infrarouges reçus sur la face interne (22i) de paroi extérieure (22).

5. Lèvre (2a) selon l'une des revendications 1 à 4, dans laquelle la paroi amont (23) comporte une face interne (23i) de paroi amont (23) configurée pour réfléchir au moins 50% des infrarouges reçus sur la face interne (23i) de paroi amont (23).

6. Lèvre (2a) selon l'une des revendications 1 à 5, dans laquelle la cloison (25) comporte une face interne (25i) de cloison (25) configurée pour réfléchir au moins 50% des infrarouges reçus sur la face interne (25i) de la cloison (25).

7. Lèvre (2a) selon l'une des revendications 2 à 6, dans laquelle la source d'émission d'infrarouges (9) est décalée longitudinalement vers l'amont par rapport à la première portion (21a) de la paroi intérieure (21).

8. Lèvre (2a) selon l'une des revendications 1 à 7, dans laquelle la lèvre (2a) comporte au moins une paroi transparente circonférentielle (81) montée sur la cloison (25) dans la cavité annulaire (24) de manière à délimiter une conduite annulaire (80), la source d'émission d'infrarouges (9) étant montée dans ladite conduite annulaire (80).

9. Lèvre (2a) selon l'une des revendications 1 à 8, comprenant un moyen de détection de givre (7) configuré pour inactiver la source d'émission d'infrarouges (9) en cas d'absence de givre.

10. Lèvre (2a) selon l'une des revendications 1 à 9, dans laquelle la paroi extérieure (22) ou la paroi amont (23), est réalisée dans un matériau configuré pour transmettre sur une face externe de ladite paroi au moins 30% des infrarouges reçus sur une face interne de ladite paroi.

11. Entrée d'air d'une nacelle de turbomachine (1) d'aéronef s'étendant selon un axe X dans lequel circule un flux d'air (F) d'amont vers l'aval, l'entrée d'air comprenant une lèvre (2a) selon l'une des revendications 1 à 10.

12. Procédé de dégivrage d'une lèvre (2a) selon l'une des revendications 1 à 10, le procédé comprenant :
une étape d'activation de la source d'émission d'infrarouges (9) dans la cavité annulaire (24) de manière à émettre des infrarouges sur la face interne d'au moins une paroi choisie parmi la paroi intérieure (21), la paroi extérieure (22) et la paroi amont (23), et
une étape de transmission à la face externe de ladite paroi ayant reçu des infrarouges d'au moins 30% des infrarouges reçus sur la face interne de ladite paroi.

13. Procédé de dégivrage selon la revendication 12, le procédé comprenant une étape de détection de la présence de givre sur la face externe de ladite paroi ayant reçu des infrarouges et une étape d'inhibition de la source d'émission d'infrarouges (9) en cas d'absence de givre.

## Patentansprüche

1. Lippe (2a) eines Lufteinlasses (2) einer Turbotriebwerksgondel (1) eines Fluggeräts, die sich in einer Achse X erstreckt, in der ein Luftstrom (F) von stromaufwärts nach stromabwärts zirkuliert, wobei sich die Lippe (2a) ringförmig um die Achse X erstreckt und eine zur Achse X zeigende Innenwand (21) und eine Außenwand (22) aufweist, die der Innenwand (21) gegenüberliegt, wobei die Innenwand (21) und die Außenwand (22) durch eine stromaufwärtige Wand (23) und eine Trennwand (25) derart verbunden sind, dass ein ringförmiger Hohlraum (24) begrenzt wird, in dem mindestens eine Infrarotemissionsquelle (9) untergebracht ist, wobei die Lippe **dadurch gekennzeichnet ist, dass** mindestens eine Wand, ausgewählt aus der Innenwand (21), der Außenwand (22) und der stromaufwärtigen Wand (23), aus einem Material hergestellt ist, das dazu ausgelegt ist, mindestens 30 % der auf einer Innenfläche der Wand empfangenen Infrarotstrahlung auf eine Außenfläche der Wand zu übertragen.

2. Lippe (2a) nach Anspruch 1, wobei die Innenwand (21) mindestens einen ersten Abschnitt (21a) aufweist, der aus einem Material hergestellt ist, das dazu ausgelegt ist, mindestens 60 % der auf einer Innenfläche der Wand empfangenen Infrarotstrahlung auf eine Außenfläche der Wand zu übertragen.

3. Lippe (2a) nach einem der Ansprüche 1 und 2, wobei die Innenwand (21) mindestens einen zweiten Abschnitt (21b) aufweist, der eine Innenfläche der Innenwand (21) aufweist, die dazu ausgelegt isst, mindestens 50 % der auf der Innenfläche der Innenwand (21) empfangenen Infrarotstrahlung zu reflektieren.

4. Lippe (2a) nach einem der Ansprüche 1 bis 3, wobei die Außenwand (22) eine Innenfläche (22i) der Außenwand (22) aufweist, die dazu ausgelegt ist, mindestens 50 % der auf der Innenfläche (22i) der Außenwand (22) empfangenen Infrarotstrahlung zu reflektieren.

5. Lippe (2a) nach einem der Ansprüche 1 bis 4, wobei die stromaufwärtige Wand (23) eine Innenfläche (23i) der stromaufwärtigen Wand (23) aufweist, die dazu ausgelegt ist, mindestens 50 % der auf der Innenfläche (23i) der stromaufwärtigen Wand (23) empfangenen Infrarotstrahlung zu reflektieren.

6. Lippe (2a) nach einem der Ansprüche 1 bis 5, wobei die Trennwand (25) eine Innenfläche (25i) der Trennwand (25) aufweist, die dazu ausgelegt ist, mindestens 50 % der auf der Innenfläche (25i) der Trennwand (25) empfangenen Infrarotstrahlung zu reflektieren.

7. Lippe (2a) nach einem der Ansprüche 2 bis 6, wobei die Infrarotemissionsquelle (9) im Verhältnis zum ersten Abschnitt (21a) der Innenwand (21) nach stromaufwärts längs versetzt ist.

8. Lippe (2a) nach einem der Ansprüche 1 bis 7, wobei die Lippe (2a) mindestens eine transparente Umfangswand (81) umfasst, die auf der Trennwand (25) im ringförmigen Hohlraum (24) derart angebracht ist, dass ein ringförmiger Kanal (80) begrenzt wird, wobei die Infrarotemissionsquelle (9) in dem ringförmigen Kanal (80) angebracht ist.

9. Lippe (2a) nach einem der Ansprüche 1 bis 8, umfassend ein Reifdetektionsmittel (7), das dazu ausgelegt ist, die Infrarotemissionsquelle (9) bei Abwesenheit von Reif zu deaktivieren.

10. Lippe (2a) nach einem der Ansprüche 1 bis 9, wobei die Außenwand (22) oder die stromaufwärtige Wand (23) aus einem Material hergestellt ist, das dazu ausgelegt ist, auf eine Außenfläche der Wand mindestens 30 % der auf einer Innenfläche der Wand empfangenen Infrarotstrahlung zu reflektieren.

11. Lufteinlass einer Turbotriebwerksgondel (1) eines Fluggeräts, der sich in einer Achse X erstreckt, in der ein Luftstrom (F) von stromaufwärts nach stromabwärts zirkuliert, wobei der Lufteinlass eine Lippe (2a) nach einem der Ansprüche 1 bis 10 umfasst.

12. Verfahren zum Enteisen einer Lippe (2a) nach einem der Ansprüche 1 bis 10, wobei das Verfahren umfasst:
einen Schritt des Aktivierens der Infrarotemissionsquelle (9) im ringförmigen Hohlraum (24) derart, dass Infrarotstrahlen auf die Innenfläche mindestens einer Wand gesendet werden, die aus der Innenwand (21), der Außenwand (22) und der stromaufwärtigen Wand (23) ausgewählt ist, und
einen Schritt des Übertragens auf die Außenfläche der Wand, die Infrarotstrahlen empfangen hat, mindestens 30 % der auf der Innenfläche der Wand empfangenen Infrarotstrahlen.

13. Enteisungsverfahren nach Anspruch 12, wobei das Verfahren einen Schritt des Ermittelns von Reif auf der Außenfläche der Wand umfasst, die Infrarotstrahlen empfangen hat, und einen Schritt des Hemmens der Infrarotemissionsquelle (9) bei Abwesenheit von Reif.

## Claims

1. A lip (2a) of an air intake (2) of an aircraft turbomachine nacelle (1) extending along an axis X in which an air flow (F) circulates from upstream to downstream, the lip (2a) annularly extending about axis X and comprising an internal wall (21) pointing to axis X and an external wall (22) which is opposite to the internal wall (21), the internal wall (21) and the external wall (22) being connected by an upstream wall (23) and a partition wall (25) so as to delimit an annular cavity (24) in which at least one infrared emission source (9) is housed, the lip is **characterized by** the fact that at least one wall, selected from the internal wall (21), the external wall (22) and the upstream wall (23), is made of a material configured to transmit, on an outer face of said wall, at least 30% of the infrared rays received on an inner face of said wall.

2. The lip (2a) according to claim 1, wherein the internal wall (21) comprises at least one first portion (21 a) made of a material configured to transmit, on an outer face of said wall, at least 60% of the infrared rays received on an inner face of said wall.

3. The lip (2a) according to one of claims 1 to 2, wherein the internal wall (21) comprises at least one second portion (21b) which comprises an inner face of internal wall (21) configured to reflect at least 50% of the infrared rays received on the inner face of internal wall (21).

4. The lip (2a) according to one of claims 1 to 3, wherein the external wall (22) comprises an inner face (22i) of external wall (22) configured to reflect at least 50% of the infrared rays received on the inner face (22i) of external wall (22).

5. The lip (2a) according to one of claims 1 to 4, wherein the upstream wall (23) comprises an inner face (23i) of upstream wall (23) configured to reflect at least 50% of the infrared rays received on the inner face (23i) of upstream wall (23).

6. The lip (2a) according to one of claims 1 to 5, wherein the partition wall (25) comprises an inner face (25i) of partition wall (25) configured to reflect at least 50% of the infrared rays received on the inner face (25i) of the partition wall (25).

7. The lip (2a) according to one of claims 2 to 6, wherein the infrared emission source (9) is longitudinally offset upstream from the first portion (21a) of the internal wall (21).

8. The lip (2a) according to one of claims 1 to 7, wherein the lip (2a) comprises at least one circumferential transparent wall (81) mounted to the partition wall (25) in the annular cavity (24) so as to delimit an annular duct (80), the infrared emission source (9) being mounted in said annular duct (80).

9. The lip (2a) according to one of claims 1 to 8, comprising an ice detection means (7) configured to deactivate the infrared emission source (9) in the absence of ice.

10. The lip (2a) according to one of claims 1 to 9, wherein the external wall (22) or the upstream wall (23), is made of a material configured to transmit, on an outer face of said wall, at least 30% of the infrared rays received on an inner face of said wall.

11. An air intake of an aircraft turbomachine nacelle (1) extending along an axis X in which an air flow (F) circulates from upstream to downstream, the air intake comprising a lip (2a) according to one of claims 1 to 10.

12. A method for de-icing a lip (2a) according to one of claims 1 to 10, the method comprising:
a step of activating the infrared emission source (9) in the annular cavity (24) so as to emit infrared rays on the inner face of at least one wall selected from the internal wall (21), the external wall (22) and the upstream wall (23), and
a step of transmitting, to the outer face of said wall having received infrared rays, at least 30% of the infrared rays received on the inner face of said wall.

13. The de-icing method according to claim 12, the method comprising a step of detecting the presence of ice on the outer face of said wall having received infrared rays, and a step of inhibiting the infrared emission source (9) in the absence of ice.
